# EUROPEAN PATENT APPLICATION

(11) **EP 4 527 343 A1**
(43) Date of publication of application: **26.03.2025**
(21) Application number: 23807751.5
(22) Date of filing: 03.03.2023
(51) Int. Cl.: A61C 7/00, G06F 30/00, G06F 1/16

(54) **METHOD AND APPARATUS FOR PROVIDING MANIPULATION HANDLE FOR ORTHODONTIC CAD**

(30) Priority: 19.05.2022 KR 20220061582
(71) Applicant: Osstem Implant Co., Ltd., Gangseo-gu Seoul 07789 (KR)
(72) Inventor: KIM, Hwa Sam, Gimpo-si Gyeonggi-do 10113 (KR); YOO, Hye Ri, Seoul 07801 (KR); CHOI, Kyoo Ok, Seoul 07340 (KR)
(74) Representative: Klunker IP Patentanwälte PartG mbB
(86) International application number: PCT/KR2023/002990
(87) International publication number: WO 2023/224227

(57) **Abstract**

Provided are a method for providing a manipulation handle for an orthodontic CAD, and an apparatus to which the method is applied. The method for providing the manipulation handle, according to an embodiment of the present disclosure, may comprise the steps of: determining a function to be performed on a selection object displayed on a screen and selected by a user of a computing system; and displaying the manipulation handle of an outer shape corresponding to the function to be performed. In this case, the manipulation handle may comprise: a button; and a guide for forming a reference position of the button.

## Description

### Technical Field

The present disclosure relates to a method of providing a manipulation handle for orthodontic computer-aided design (CAD) and, more particularly, to a method and apparatus for supporting a manipulation handle for manipulating a selected object during an orthodontic CAD operation.

### Background Art

When an object determined to require manipulation such as movement or rotation is selected by a user, in the process of repositioning teeth or placing intraoral devices through orthodontic computer-aided design CAD software, a manipulation handle (e.g., a manipulator) may be displayed to receive an input of the manipulation for the selected object.

In the process of placing teeth and intraoral devices through typical digital dental software, however, adjusting an additional object other than the selected object may not be possible and, in case of a need for a function in addition to movement and rotation, the function may be required to be called and executed, separately from a typical manipulation user interface (UI).

### Disclosure of Invention

### Technical Goals

A technical object to be achieved by at least some embodiments of the present disclosure is to provide a manipulation handle support method and apparatus that supports quick and convenient orthodontic planning.

Another technical object to be achieved by at least some embodiments of the present disclosure is to provide a manipulation handle support method and apparatus that provides an intuitive view of a function applicable to a selected object.

Another technical object to be achieved by at least some embodiments of the present disclosure is to provide a manipulation handle support method and apparatus that allows manipulation to be input for an object other than a selected object.

The technical objects of the present disclosure are not limited to those described above, and other technical objects or challenges not described above will also be apparent to those of ordinary skill in the art from the following description.

### Technical Solutions

To solve the preceding technical problems, according to an embodiment of the present disclosure, there is provided a method of providing a manipulation handle, the method including: determining a function to be performed on a selected object that is displayed on a screen and selected by a user of a computing device; and displaying the manipulation handle of an outer shape corresponding to the function. The manipulation handle may include a button and a guide forming a reference position of the button.

In an embodiment, the guide may have a shape of a figure having a transparent interior, and the button may be arranged on an outline of the guide.

In an embodiment, the displaying of the manipulation handle of the outer shape corresponding to the function may include: displaying the guide of the manipulation handle in a circle, in response to the selected object that is selected by the user of the computing device including a rotate function; and displaying the guide of the manipulation handle in a polygon, in response to the selected object that is selected by the user of the computing device not including the rotate function.

In an embodiment, the determining of the function to be performed on the selected object may include: identifying an additional object associated with the selected object; and determining a function to be performed on the additional object. The displaying of the manipulation handle of the outer shape corresponding to the function may include: arranging a first button for manipulating the selected object and a second button for manipulating the additional object, on an outline of the guide of the manipulation handle.

In an embodiment, the displaying of the manipulation handle of the outer shape corresponding to the function may include: in response to the selected object being a three-dimensional (3D) object, displaying an X-axis manipulation handle, a Y-axis manipulation handle, and a Z-axis manipulation handle.

To solve the preceding technical problems, according to an embodiment of the present disclosure, there is provided a method of providing a manipulation handle, the method including: identifying, among objects displayed on a screen, an object selected by a user of a computing device; determining, from among the objects displayed on the screen, an additional object associated with the selected object; and displaying a manipulation handle for the selected object and the additional object. The manipulation handle may include a first button, a second button, and a guide forming reference positions of the first button and the second button. The first button may be a button for manipulating the selected object, and the second button may be a button for manipulating the additional object associated with the selected object, the additional object being an object not selected by the user of the computing device.

In an embodiment, the first button may be arranged in a first region of the guide, and the second button may be arranged in a second region of the guide. The first region and the second region may be non-overlapping regions.

In an embodiment, the first region and the second region may have symmetrical positions with respect to each other.

In an embodiment, the guide may be displayed in different shapes based on whether functions for the selected object include a rotate function.

### Effects of Invention

According to at least some embodiments of the present disclosure, a user may intuitively identify a type of manipulation that is applicable to an object selected by the user simply by visually recognizing the outer shape of a manipulation handle that is displayed after the user selects the object, and it may thus be possible to improve the speed of orthodontic computer-aided design (CAD) operations.

According to at least some embodiments of the present disclosure, a user may perform an orthodontic CAD operation without switching screens by using a handle having a button for receiving an input of required manipulation in addition to a basic function such as movement and rotation, and it may thus be possible to improve the speed of orthodontic CAD operations.

According to at least some embodiments of the present disclosure, a user may perform an orthodontic CAD operation without switching screens by using a handle having a button for receiving an input of manipulation required for a selected object and an additional object, and it may thus be possible to improve the speed of orthodontic CAD operations.

According to at least some embodiments of the present disclosure, a user may perform an orthodontic CAD operation that provides a limit on a feasible manipulation range applicable to actual orthodontic treatment and supports movement within the range, and it may thus be possible to increase the reliability when producing a device and applying it to treat patients.

### Brief Description of Drawings

FIG. 1 is a flowchart illustrating a method of providing a manipulation handle, according to an embodiment of the present disclosure.
FIGS. 2 and 3 are diagrams illustrating examples of the manipulation handle described with reference to FIG. 1.
FIGS. 4 and 5 are diagrams illustrating a button formed on the manipulation handle described with reference to FIGS. 2 and 3.
FIGS. 6 through 9 are diagrams illustrating an object on which a manipulation handle is displayed, in the method of providing a manipulation handle described with reference to FIG. 1.
FIGS. 10 and 11 are diagrams illustrating functions for different shapes of a manipulation handle, according to an embodiment of the present disclosure.
FIG. 12 is a diagram illustrating a manipulation handle that receives an input of manipulating a three-dimensional (3D) object, according to an embodiment of the present disclosure.
FIG. 13 is a flowchart illustrating a method of receiving, as an input, an object for which a manipulation handle is to be provided, according to at least some embodiments of the present disclosure.
FIG. 14 is a hardware configuration diagram illustrating an apparatus for providing a manipulation handle, according to at least some embodiments of the present disclosure.

### Best Mode for Carrying Out Invention

Hereinafter, embodiments of the present disclosure will be described in detail with reference to the accompanying drawings. The advantages and features of the present disclosure, and methods of achieving them, will become apparent upon referring to the embodiments described in detail with reference to the accompanying drawings. However, the technical objects and ideas of the present disclosure are not limited to the following embodiments but may be embodied in various forms, and the following embodiments are provided only to make the technical objects and ideas of the present disclosure be completed and to fully inform, of the scope of the present disclosure, those of ordinary skill in the art to which the present disclosure pertains. The technical objects and ideas of the present disclosure are defined by the scope of appended claims. In describing the present disclosure, detailed descriptions of related known configurations or features are omitted where it is deemed that such descriptions obscure the essence of the present disclosure. Hereinafter, at least some embodiments of the present disclosure will be described with reference to the accompanying drawings.

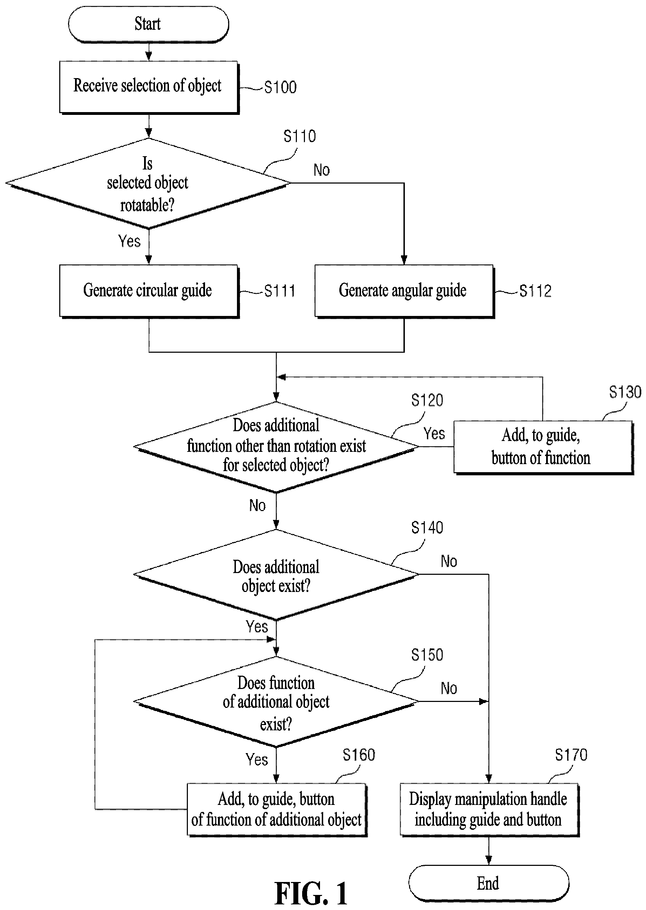

A method of providing a manipulation handle, or simply a manipulation handle provision method, according to an embodiment of the present disclosure will be described with reference to FIGS. 1 through 3.

The manipulation handle provision method according to an embodiment may be performed by at least one computing device. In the following description of the manipulation handle provision method according to an embodiment, the description of a subject performing some operations may be omitted. In this case, the subject performing the operations is to be understood as the computing device. Hereinafter, the computing device will also be referred to as an "orthodontic computer-aided design (CAD) device" in the following description.

The orthodontic CAD device may receive, as an input, selecting an object from a user in step S100. Hereinafter, the object selected by the user will be referred to as a selected object. The orthodontic CAD device may analyze functions applicable to the selected object.

For example, the orthodontic CAD device may first determine whether the selected object may perform a rotate function as a function to be performed thereon, in step S110.

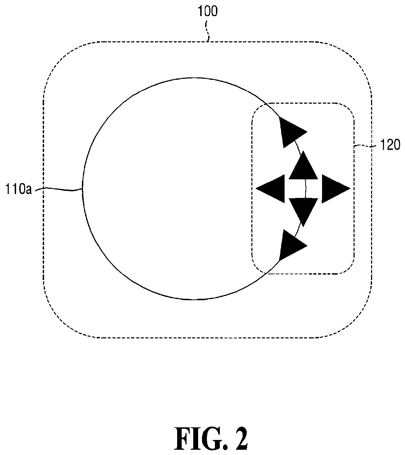

When it is determined in step S110 that the selected object is an object on which the rotate function is to be performed, the orthodontic CAD device may display a manipulation handle 100, such as one shown in FIG. 2, in step S111. The orthodontic CAD device may display the manipulation handle 100 at a position adjacent to the selected object. For example, the orthodontic CAD device may determine a display position of the manipulation handle 100 such that the selected object is positioned inside the manipulation handle 100.

The manipulation handle 100 may include a button 120 and a guide 110a that forms a reference position for the button 120. The user of the orthodontic CAD device may manipulate the selected object using the button 120 included in the manipulation handle 100.

The guide 110a and 110b may refer to a tool including a function that allows the user to identify selectable objects, a function that receives a selection for the objects, a function that allows the user to identify manipulation available to be input to a selected object, a function that receives manipulation for the object, and a function that allows the user to identify the object for which the manipulation has been input.

As described above, the guide 110a may provide the reference position for the button 120. That is, the position of the button 120 may be determined with respect to the position of the guide 110a. For example, the button 120 may be positioned on an outline of the guide 110a as shown in FIG. 2 or may be positioned adjacent to the outline of the guide 110a. For example, the button 120 may be positioned adj acent to the outline of the guide 110a but be outside the outline, or the button 120 may be positioned adjacent to the outline of the guide 110a but be inside the outline.

The guide 110a may be provided in a shape (or figure) having a transparent interior, as shown in FIG. 2, such that a screen inside the guide 110a remains visible as is. The outline of the shape may be drawn with lines of a predetermined type.

The user of the orthographic CAD device may intuitively recognize what manipulation may be performed on the selected object by recognizing the manipulation handle 100. For example, the user of the orthodontic CAD device may intuitively recognize what manipulation may be performed on the selected object through the shape of the guide 110a of the manipulation handle 100.

For example, in a case where the shape of the guide 110a of the manipulation handle 100 is circular, the user of the orthodontic CAD device may intuitively recognize that the selected object may perform the rotate function.

When, in consideration of this, the rotate function is available to be performed on the selected object, the manipulation handle 100, such as the one shown in FIG. 2, may be displayed. On the outline of the guide 110a of the manipulation handle displayed as shown in FIG. 2, the button 120 that receives, as an input, required manipulation may be arranged.

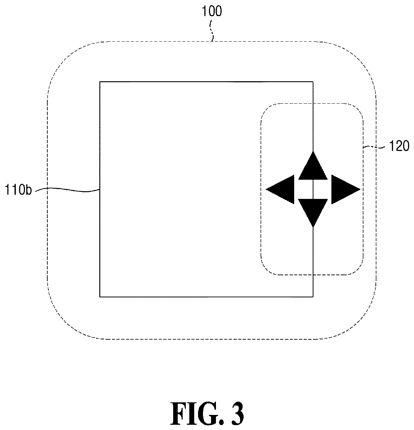

When the selected object is an object for which performing the rotate function is not available, the orthodontic CAD device may display, for the selected object, a manipulation handle including a guide having a polygonal shape in S112. For example, the manipulation handle may include a rectangular guide 110b as shown in FIG. 3.

The orthodontic CAD device may then determine whether an additional separate function other than rotation and movement is applicable to the selected object in step S120. When there is an additional separate function applicable to the selected object, a button for receiving an input of manipulating the additional separate function may be added to the manipulation handle of the selected object in step S130.

The additional separate function is not limited to any specific function but may include any function defined by the orthodontic CAD device. Such an additional function may include, for example, a fix function to fix a selected object, a delete function to delete the selected object, a reset function to cancel functions that have been performed on the selected object, a symmetric move function to move the selected object symmetrically, an interproximal reduction (IPR) increase function to increase an interproximal surface removal amount, an IPR decrease function to decrease the interproximal surface removal amount, or the like.

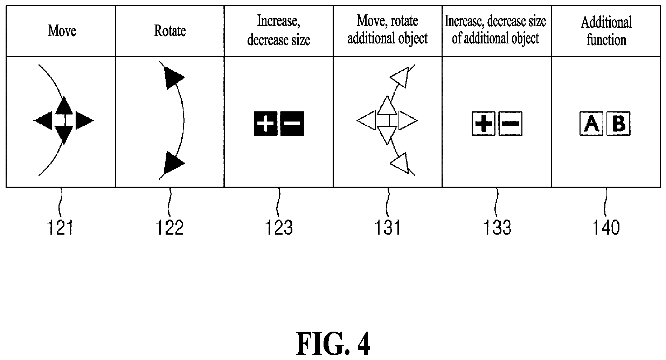

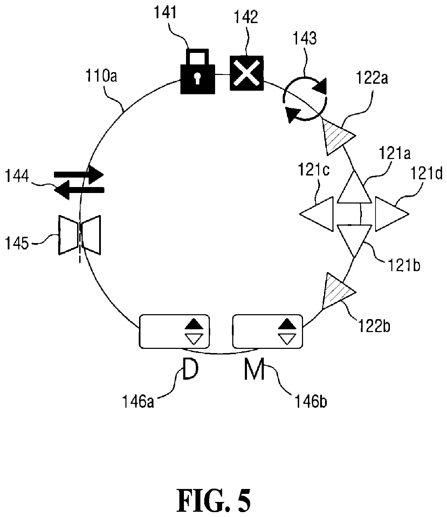

FIGS. 4 and 5 are diagrams illustrating a button formed on an outline of the manipulation handle described above with reference to FIGS. 2 and 3.

Buttons shown in FIG. 4 may be examples of a button to be arranged on an outline of a guide of a manipulation handle that is displayed when a selection for an object is input.

In this case, a button to be arranged without further manipulation by a user may include a move button 121 for a selected object.

In a case where a guide of a basic manipulation handle to be displayed is circular, buttons arranged on an outline of the guide may include the move button 121 and a rotate button 122 of the selected object. The basic manipulation handle may be a default type of handle that is displayed without any further manipulation by the user.

In a case where a function to be performed on the selected object includes a resize function, the buttons arranged on the outline of the guide of the displayed basic manipulation handle may include a resize button 123.

In a case where the guide of the displayed basic manipulation handle is circular and an additional object associated with the selected object is identified, the buttons arranged on the outline of the guide may include a move and rotate button 131 for the additional object.

Further, in a case where a function to be performed on the additional object includes a resize function, the buttons arranged on the outline of the guide may include a resize button 133.

The additional object may be construed as a related object that is affected when the selected object is manipulated and the state of the selected object is changed. The additional object may be automatically set based on a degree of relevance, correlation, or the like between the objects at a time before the input selecting the selected object is made, or may be separately specified by the user in response to the selected object. The user of the orthodontic CAD device may manipulate, simultaneously with manipulation of the selected object, an additional object from which, when manipulating a selected object, simultaneously inputting the manipulation of the selected object is expected to increase the efficiency of orthodontic CAD operations.

That is, the manipulation handle provision method according to an embodiment may provide the convenience that, simply by selecting a (selected) object, only a single manipulation handle enables the manipulation even for an additional object having the advantage of being manipulated together. This convenience may reduce the number of times of manipulation the user needs to make and may, in turn, reduce the amount of time required for orthodontic CAD operations.

In a case where the guide of the basic manipulation handle is angular (e.g., a polygon) rather than circular, the buttons arranged on the outline of the guide may include the move button 121 for the selected object. In a case where the function of the selected object includes the resize function, the resize button 123 may be arranged on the outline of the guide of the displayed basic manipulation handle.

In a case where the guide of the basic manipulation handle is angular rather than circular and an additional object associated with the selected object is identified, a move button 131 or a resize button 133 of the additional object may be arranged on the outline of the guide based on a function to be performed on the additional object.

Among the buttons arranged on the outline of the guide of the basic manipulation handle, a button for manipulating the selected object may be referred to herein as a first button, and a button for manipulating the additional object may be referred to herein as a second button.

The first button may be arranged in a first region of the guide, and the second button may be arranged in a second region of the guide. In this case, the first region and the second region may be non-overlapping regions. Further, even when the selected object or the additional object changes, the positions of the first region and the second region may not change. Further, even when the functions indicated by the first button and the second button change, the positions of the first region and the second region may not change. That is, as the use time increases, the user may learn naturally whether a button is for the selected object or the additional object based on where the button is displayed on the guide. Therefore, by checking where the button is displayed on the guide, the user may intuitively recognize whether the button is for manipulating the selected object or the additional object and prevent incorrect manipulation accordingly.

In a case where the first button and the second button are responsible for performing the same function, the first button and the second button may have the same shape. Accordingly, the user may intuitively recognize that the first button and the second button are both for performing the same function. Although, when the first button and the second button are for performing the same function, the first button and the second button are formed in the same shape, they may be displayed separately, with one button on the left and the other on the right, one button in black and the other in white, or one button with no color and the other being colored.

This may allow the user to intuitively determine whether a button is for manipulating the selected object or for manipulating the additional object. As described above, the buttons 121, 122, and 123 for manipulating the selected object may be formed on the right side and the buttons 131 and 133 for manipulating the additional object may be formed on the left side, as shown in FIG. 4. Also, the buttons 121, 122, and 123 for manipulating the selected object may be colored in black, and the buttons 131 and 133 for manipulating the additional object may be colored in white. Further, the buttons 121 and 131 for moving the objects may have the same outer shape, and the buttons 122 and 131 for rotating the objects may have the same outer shape.

The manipulation handle may include an additional function button 140 for adding a function, in addition to the previously described buttons.

FIG. 5 illustrates example buttons to be registered as the additional function button 140. The buttons that may be registered as the additional function button 140 may include, for example, a fix button 141 to fix a selected tooth in order not to be adjusted, an extract button 142 to remove the selected tooth, a reset button 143 to reset an input adjustment, an interproximal move button 144 to move the selected tooth to a neighboring tooth position, a symmetrical move button 145 to move the selected tooth to a symmetrical position, an IPR increase button 146a to increase an interproximal surface removal amount, an IPR decrease button 146b to decrease the interproximal surface removal amount, or the like.

Further, the buttons arranged on the outline of the guide of the manipulation handle may be arranged in groups separated by function, i.e., a plurality of buttons for a specific function to be performed may be arranged adjacent to each other. Hereinafter, each example button group will be described with reference to FIG. 5.

Amove button group 121 may include an upward move button 121a, a downward move button 121b, a leftward move button 121c, and a rightward move button 121d.

A rotate button group 122 may include a counterclockwise rotate button 122a and a clockwise rotate button 122b. The counterclockwise rotate button 122a and the clockwise rotate button 122b may be arranged with the move button group 121 therebetween.

A resize button group 133 may include a size increase button and a size decrease button. When separated by the functions they perform, these buttons may be generated at positions that do not overlap the move button group 121.

The configuration of a manipulation handle for manipulating a selected object, which is selected by a user, has been described above. According to at least some embodiments of the present disclosure, the manipulation handle may further include button groups for an additional object. That is, the manipulation handle provision method according to an embodiment of the present disclosure may provide a manipulation handle that also supports manipulation on an unselected object.

Hereinafter, automatically displaying buttons for manipulating an additional object on a manipulation handle will be further described with reference to FIG. 1. The orthodontic CAD device may determine whether there is an additional object associated with a selected object in step S140. That is, the orthodontic CAD device may determine whether, among objects displayed on the screen, there is an object that satisfies the requirements for the additional object described above in association with the selected object. In some embodiments, the orthodontic CAD device may also find the selected object among objects that are not displayed on the screen.

In an embodiment, the orthodontic CAD device may check whether there is an additional object associated with the selected object in step S140 and, if no additional object is present, may display, on a guide, a manipulation handle in which one or more buttons for manipulating the selected object are displayed in step S170.

When there is an additional object associated with the selected object, the orthodontic CAD device may determine a function to be performed on the additional object in step S150. When there is a function to be performed on the additional object, the orthodontic CAD device may additionally arrange, on the guide of the manipulation handle, a button for receiving an input of manipulating the function to be performed on the additional object in step S160. Also, when there is no additional function to be performed on the additional object, it may display, on the guide, the manipulation handle in which one or more buttons for manipulating the selected object are displayed in step S170.

In an embodiment, when there is a function to be performed on the additional object, the orthodontic CAD device may additionally arrange, on the guide of the manipulation handle, a button for receiving an input of manipulating the function to be performed on the additional object in step S160, and determine an additional function by checking whether there is an additional function to be performed in addition to the button additionally arranged for the additional object in step S150. When there is an additional function to be performed on the additional object, the orthodontic CAD device may additionally arrange, on the guide of the manipulation handle, a button for receiving an input of manipulating the function to be performed on the additional object in step S160.

That is, steps S150 and S160 may be repeatedly performed based on the function to be performed on the additional object, and when there is no additional function to be performed on the additional object in the process of repeatedly performing, the orthodontic CAD device may display the manipulation handle including a button for the selected object and a button for the additional object, which are previously arranged on the guide in steps S130 and S160, in step S170.

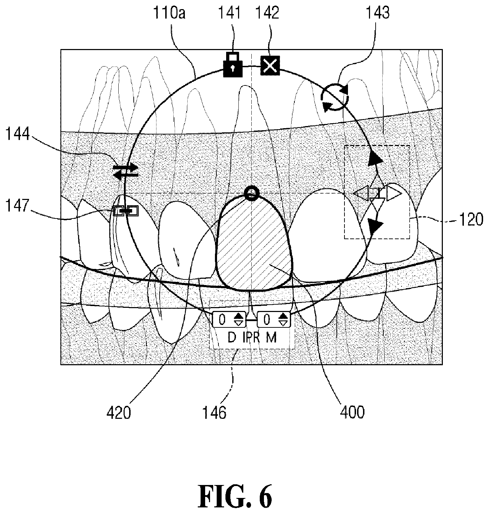

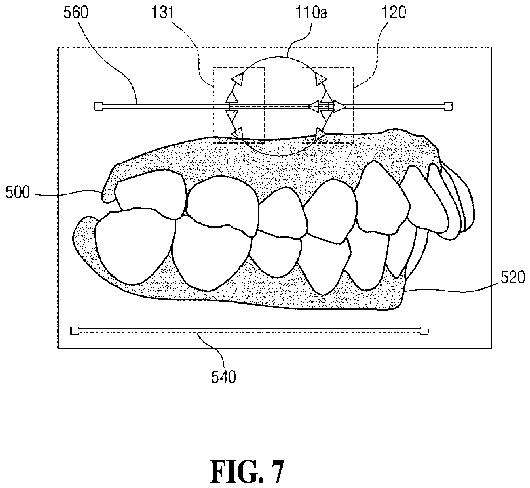

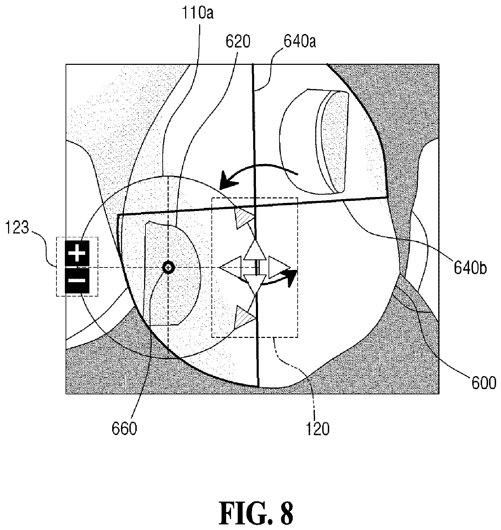

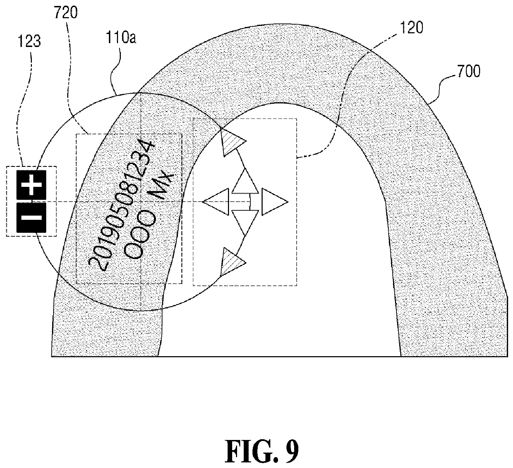

Hereinafter, example cases in which the manipulation handle described above according to embodiments is displayed on a screen will be described with reference to FIGS. 6 through 9. FIG. 6 illustrates a manipulation handle when a tooth object is selected as a (selected) object, FIG. 7 illustrates a manipulation handle when maxillary scan data is selected as a (selected) object, FIG. 8 illustrates a manipulation handle when an attachment is selected as a (selected) object, and FIG. 9 illustrates a manipulation handle when a label is selected as a (selected) object.

Referring to FIG. 6, a guide 110a of a manipulation handle for adjusting a selected tooth 400 on which a rotate function is available to be performed may be displayed in a circle with a center axis for a tooth rotation as a center point 420. On an outline of the guide 110a displayed in the circle, buttons 120, 141, 142, 143, 144, 146, and 147 may be arranged to receive an input of manipulating functions to be performed on the selected tooth 400.

Referring to FIG. 7, a guide 110a of a manipulation handle for adjusting maxilla 500 of selected scan data, which is available for an angle adjustment, may be displayed in a circle over a reference axis 560 parallel to the maxilla 500. A mandibular reference axis 540 parallel to mandible 520 of the scan data, which is an additional object associated with the maxillary reference axis 560 of the scan data, may be displayed. The mandibular reference axis 540 may be formed such that angle and position changes of the mandible 520 are intuitively visible, and a move button and a rotate button 131 for the additional object for receiving an input of manipulating the mandible 520, which is the additional object, may be arranged on the outline of the guide of the manipulation handle along with a button for receiving an input of manipulating the selected object.

A manipulation handle provided in the process of planning an operation of attaching an attachment to a curved tooth by applying a three-dimensional (3D) shape of the tooth and the attachment will be described with reference to FIG. 8.

Referring to FIG. 8, an attachment 620, which is a selected object to be attached to a tooth 600, may rotate along the shape of the tooth 600 to which it is to be attached, and thus a guide 110a of a manipulation handle for adjusting the selected object may be displayed in a circle.

Further, since the attachment 620 needs to receive, as an input, adjustments such as changing the position according to the shape of the tooth 600 to which it is to be attached, a button 120 for receiving, as an input, required manipulation may be arranged on the guide 110a of the manipulation handle for adjusting the attachment 620. Also, since the attachment 620 needs to receive, as an input, adjustments of an angle of a surface attached to the tooth according to the shape of the tooth, a manipulation handle including a rotate function for rotating about a Y axis 640a and a Z axis 640b may be displayed on the guide 110a of the manipulation handle for adjusting the attachment 620.

An X-axis manipulation handle, a Y-axis manipulation handle, and a Z-axis manipulation handle, which may be displayed in a case where a selected object is a 3D object, will be described below.

Referring to FIG. 9, data that may be registered in the orthodontic CAD device may be labeled. In an embodiment of FIG. 9, a label 720 displayed in a mandibular view 700 of an axial cross-section may be a selected object, and a manipulation handle may be provided to the label 720 which is the selected object.

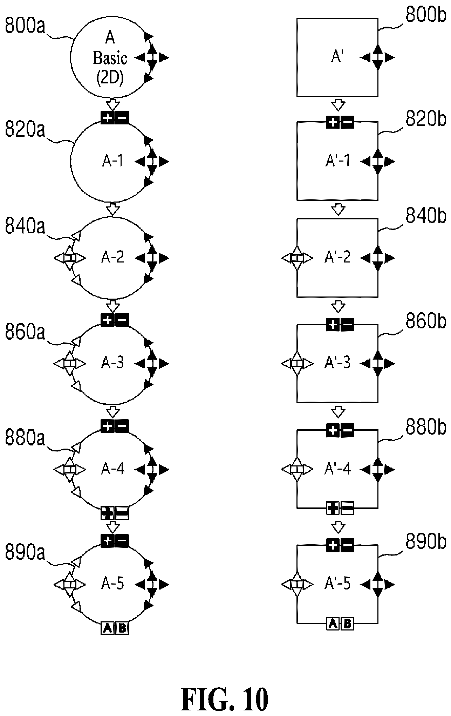

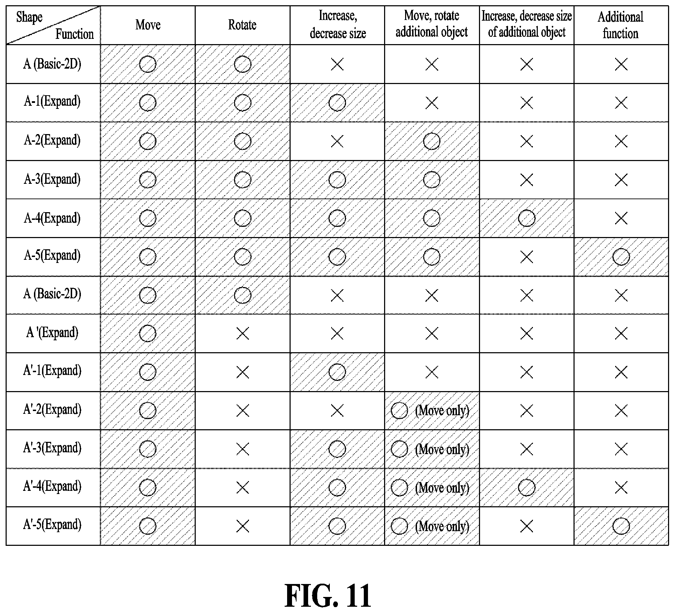

Hereinafter, functions to be performed corresponding to the respective shapes of the manipulation handle described above will be described once again from the perspective of expanding the functions of the manipulation handle, with reference to FIGS. 10 and 11.

In a case where the manipulation handle is an A basic type 800a, a rotate function and a move function may be performed on a selected object.

In a case where the manipulation handle expanded with a function is A' 800b, a move function may be performed on the selected object.

In a case where the manipulation handle expanded with an additional function is A-1 820a, a rotate function, a move function, and a size increase and decrease function may be performed on the selected object.

In a case where the manipulation handle expanded with an additional function is A'-1 820b, a move function and a size increase and decrease function may be performed on the selected object.

In a case where the manipulation handle expanded with an additional function is A-2 840a, a rotate function and a move function may be performed on the selected object, and a rotate function and a move function may be performed on an additional object.

In a case where the manipulation handle expanded with an additional function is A'-2 840b, a move function may be performed on the selected object, and a move function may be performed on the additional object.

In a case where the manipulation handle expanded with an additional function is A-3 860a, a rotate function, a move function, and a size increase and decrease function may be performed on the selected object, and a rotate function and a move function may be performed on the additional object.

In a case where the manipulation handle expanded with an additional function is A'-3 860b, a move function and a size increase and decrease function may be performed on the selected object, and a move function may be performed on the additional object.

In a case where the manipulation handle expanded with an additional function is A-4 880a, a rotate function, a move function, and a size increase and decrease function may be performed on the selected object, and a rotate function, a move function, and a size increase and decrease function may be performed on the additional object.

In a case where the manipulation handle expanded with an additional function is A'-4 880b, a move function and a size increase and decrease function may be performed on the selected object, and a move function and a size increase and decrease function may be performed on the additional object.

In a case where the manipulation handle expanded with an additional function is A-5 890a, a rotate function, a move function, and a size increase and decrease function may be performed on the selected object, and a rotate function and a move function may be performed on the additional object, and an additional separate function may be additionally selected.

In a case where the manipulation handle expanded with an additional function is A'-5 890b, a move function and a size increase and decrease function may be performed on the selected object, and a move function may be performed on the additional object, and an additional separate function may be additionally selected.

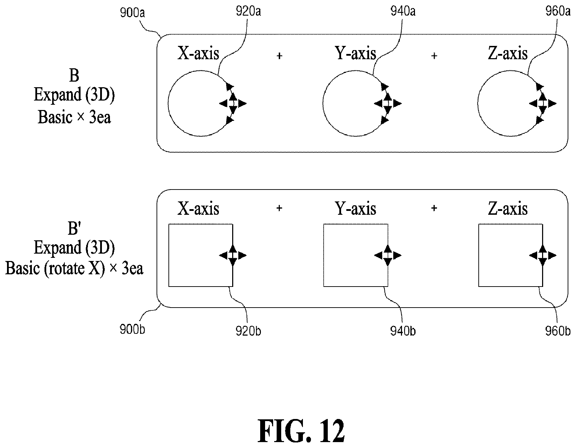

FIG. 12 is a diagram illustrating a manipulation handle that receives an input of manipulating a 3D object. As shown in FIG. 8, a model planned by the orthodontic CAD device may be a model to be implemented in 3D, and thus in a case where a selected object is a 3D object, its 3D shape may need to be applied to the orthodontic CAD device. In a case where the selected object is a 3D object and a rotate function is available to be performed, an X-axis manipulation handle 920a, a Y-axis manipulation handle 940a, and a Z-axis manipulation handle 960a, which are included in a 3D group 900a of an expanded basic manipulation handle, may be displayed. The X-axis manipulation handle 920a, the Y-axis manipulation handle 940a, and the Z-axis manipulation handle 960a may each include a circular guide.

When the selected object, which is a 3D object, does not receive the rotate function, an X-axis manipulation handle 920b, a Y-axis manipulation handle 940b, and a Z-axis manipulation handle 960b, which are included in a 3D group 900b of an expanded basic manipulation handle, may be displayed. The X-axis manipulation handle 920b, the Y-axis manipulation handle 940b, and the Z-axis manipulation handle 960b may each include a rectangular guide.

This will be described further with reference to FIG. 8. The position of the attachment 620, which is the selected object, may be a center point 660 of the guide 110a of the X-axis manipulation handle.

Since FIG. 8 illustrates a situation where a field of view (FOV) of a screen is almost parallel to an X-axis, only an X-axis manipulation handle is shown. Accordingly, when the FOV of the screen is almost parallel to a Y-axis 640a, a Y-axis manipulation handle may be displayed, and when the FOV is almost parallel to a Z-axis 640b, a Z-axis manipulation handle may be displayed. In this case, that the FOV of the screen is "almost parallel" to a certain axis may indicate that a difference in angle between the FOV of the screen and the certain axis is less than or equal to a predetermined angle.

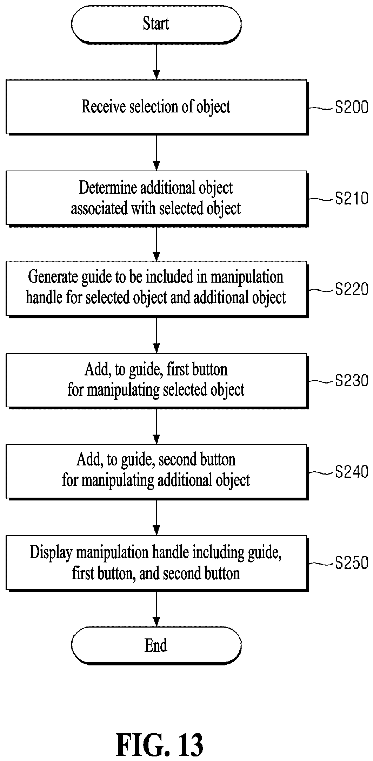

A manipulation handle provision method according to another embodiment of the present disclosure will be described below with reference to FIG. 13. According to this embodiment, in addition to a button for manipulating an object selected by a user, a button for manipulating an additional object not selected by the user may be displayed on a manipulation handle, reducing the number of times to select objects. In describing the present embodiment, the technical objects and ideas borrowed from the embodiments described above may be adopted as is or partially modified, and thus the description of the preceding embodiments will not be repeated here.

The orthodontic CAD device may receive a selection of an object from a user in step S200. It may then find an additional object associated with the object selected by the user on a currently displayed screen, or if it is not present on the currently displayed screen, find the additional object from among previously generated objects in step S210.

When the selected object and the additional object are determined, the orthodontic CAD device may generate a guide to be included in a manipulation handle based on whether the selected object is rotatable in step S220. As described above, an outer shape of the guide may be determined based on whether the selected object is rotatable or not. In some embodiments, when at least one of the selected object or the additional object is rotatable, the guide may be displayed in a circle.

The orthodontic CAD device may then add a first button for manipulating the selected object to the guide in step S230 and a second button for manipulating the additional object to the guide in step S240. Lastly, the orthodontic CAD device may display the manipulation handle including the generated guide and the added first and second buttons in step S250.

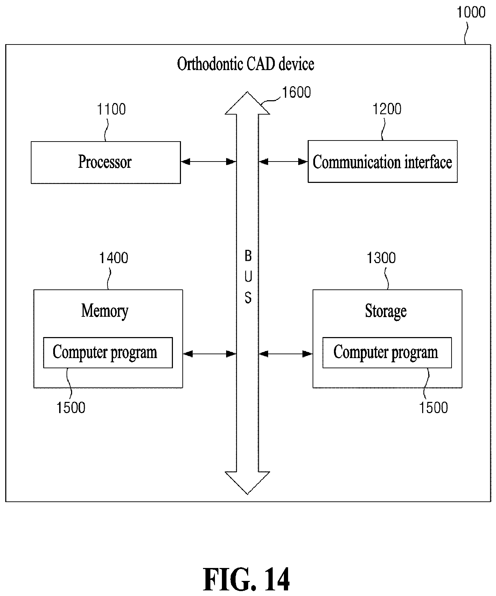

FIG. 14 is a hardware configuration diagram illustrating an orthodontic CAD device according to another embodiment of the present disclosure. An orthodontic CAD device 1000 shown in FIG. 14 may include at least one processor 1100, a system bus 1600, a communication interface 1200, a memory 1400 configured to load a computer program 1500 executed by the processor 1100, and a storage 1300 configured to store the computer program 1500.

The processor 1100 may control the overall operation of each component of the orthodontic CAD device 1000. The processor 1100 may perform operations of at least one application or program for executing the methods/steps described herein according to various embodiments of the present disclosure. The memory 1400 may store various data, instructions, and/or information. The memory 1400 may load the at least computer program 1500 from the storage 1300 to execute the methods/steps described herein according to various embodiments of the present disclosure. The bus 1600 may provide communication capabilities between components of the orthodontic CAD device 1000. The communication interface 1200 may support Internet communication of the orthodontic CAD device 1000. The storage 1300 may non-transitively store the at least one computer program 1500. The computer program 1500 may include one or more instructions implementing the methods/steps described herein according to various embodiments of the present disclosure. When the computer program 1500 is loaded into the memory 1400, the processor 1100 may execute the one or more instructions to perform the methods/steps described herein according to various embodiments of the present disclosure.

The computer program 1500 may include instructions for performing the operations or steps of providing a manipulation handle. For example, the computer program 1500 may include an instruction for determining a function to be performed on an object displayed on a screen and selected by a user of the computing device, and an instruction for displaying a manipulation handle having an outer shape corresponding to the function. The computer program 1500 may also include an instruction for identifying the object selected by the user of the computing device among objects displayed on the screen, an instruction for determining an additional object, which is an object associated with the selected object, from among the objects displayed on the screen, and an instruction for displaying the manipulation handle for the selected object and the additional object. **In** this case, the manipulation handle may include a first button, a second button, and a guide forming reference positions for the first button and the second button. Here, the first button may be provided to manipulate the selected object, and the second button may be provided to manipulate the additional object. The second button may be a button for manipulating the additional object, which is an object associated with the selected object and is not selected by the user of the computing device.

Various embodiments of the present disclosure and effects of the embodiments have been described above with reference to FIGS. 1 through 14. The effects according to the technical objects and ideas of the present disclosure are not limited to those described above, and other effects not described above may also be apparent to those of ordinary skill in the art from the description provided herein. The technical objects and ideas of the present disclosure described herein may be implemented as computer-readable code on a computer-readable medium. A computer program recorded on the computer-readable recording medium may be transmitted to another computing device over a network, such as the Internet, and installed on the other computing device, thereby enabling the use on the other computing device.

Although the operations or steps are shown in a specific order in the drawings, it is to be noted that the operations or steps may not need to be executed necessarily in the specific order shown or in sequential order or the illustrated operations or steps may not need to be executed all to achieve desired results. In certain situations, multitasking and parallel processing may be more effective. While embodiments of the present disclosure have been described above with reference to the accompanying drawings, those of ordinary skill in the art to which the present disclosure pertains will understand that the description is provided merely to illustrate the technical objects and ideas of the present disclosure, and various modifications and changes may be made without departing from the essential quality of the present disclosure. Accordingly, the embodiments described herein are not intended to limit the technical objects and ideas of the present disclosure but to explain them, and the scope of the technical objects and ideas of the present disclosure is not limited by these embodiments. The scope of protection of the present disclosure shall be interpreted in accordance with the claims below, and all technical objects or ideas within the scope equivalent thereto shall be construed as being included in the scope of the claims of the present disclosure.

## Claims

1. A method performed by a computing device to provide a manipulation handle, the method comprising:
determining a function to be performed on a selected object that is displayed on a screen and selected by a user of the computing device; and
displaying the manipulation handle of an outer shape corresponding to the function,
wherein the manipulation handle comprises a button and a guide forming a reference position of the button.

2. The method of claim 1, wherein the guide has a shape of a figure having
a transparent interior, and
the button is arranged on an outline of the guide.

3. The method of claim 1, wherein the displaying of the manipulation handle of the outer shape corresponding to the function comprises:
displaying the guide of the manipulation handle in a circle, in response to the selected object that is selected by the user of the computing device comprising a rotate function; and
displaying the guide of the manipulation handle in a polygon, in response to the selected object that is selected by the user of the computing device not comprising the rotate function.

4. The method of claim 1, wherein the determining of the function to be performed on the selected object comprises:
identifying an additional object associated with the selected object; and
determining a function to be performed on the additional object,
wherein the displaying of the manipulation handle of the outer shape corresponding to the function comprises:
arranging a first button for manipulating the selected object and a second button for manipulating the additional object, on an outline of the guide of the manipulation handle.

5. The method of claim 1, wherein the displaying of the manipulation handle of the outer shape corresponding to the function comprises:
in response to the selected object being a three-dimensional (3D) object, displaying an X-axis manipulation handle, a Y-axis manipulation handle, and a Z-axis manipulation handle.

6. A method performed by a computing device to provide a manipulation handle, the method comprising:
identifying, among objects displayed on a screen, an object selected by a user of the computing device;
determining, from among the objects displayed on the screen, an additional object associated with the selected object; and
displaying a manipulation handle for the selected object and the additional object,
wherein the manipulation handle comprises a first button, a second button, and a guide forming reference positions of the first button and the second button,
wherein the first button is a button for manipulating the selected object, and
the second button is a button for manipulating the additional object associated with the selected object, the additional object being an object not selected by the user of the computing device.

7. The method of claim 6, wherein the first button is arranged in a first
region of the guide, and the second button is arranged in a second region of the guide,
wherein the first region and the second region are non-overlapping regions.

8. The method of claim 7, wherein the first region and the second region have symmetrical positions with respect to each other.

9. The method of claim 6, wherein the guide is displayed in different shapes based on whether functions for the selected object comprise a rotate function.
